# EUROPEAN PATENT APPLICATION

(11) **EP 4 484 466 A1**
(43) Date of publication of application: **01.01.2025**
(21) Application number: 24185193.0
(22) Date of filing: 28.06.2024
(51) Int. Cl.: C08G 73/10, C08K 9/06

(54) **POLYIMIDE VARNISH WITH IMPROVED PULSE ENDURANCE AND POLYIMIDE COATING MATERIAL PREPARED THEREFROM**

(30) Priority: 30.06.2023 KR 20230084737
(71) Applicant: PI Advanced Materials Co., Ltd., Chungcheongbuk-do 27818 (KR)
(72) Inventor: RO, Gyeong Hyeon, 27818 Iwol-myeon, Jincheon-gun, Chungcheongbuk-do (KR); MOON, GyeongMin, 27818 Iwol-myeon, Jincheon-gun, Chungcheongbuk-do (KR); PARK, Se Joo, 27818 Iwol-myeon, Jincheon-gun, Chungcheongbuk-do (KR); LEE, Ik Sang, 27818 Iwol-myeon, Jincheon-gun, Chungcheongbuk-do (KR)
(74) Representative: Icosa

(57) **Abstract**

Provided is polyimide varnish comprising: polyamic acid containing dianhydride monomer and diamine monomer as polymerized units; and nanosilica, wherein the nanosilica has an absolute value of zeta potential of 10.0 mV to 40.0 mV.

## Description

### CROSS-REFERENCE TO RELATED APPLICATIONS

This application claims priority under 35 U.S.C. §119 to Korean Patent Application No. 10-2023-0084737, filed on June 30, 2023, in the Korean Intellectual Property Office, the disclosure of which is incorporated herein by reference in its entirety.

### TECHNICAL FIELD

The following disclosure relates to polyimide varnish and a polyimide coating material prepared therefrom, and more particularly to polyimide varnish having excellent pulse endurance and a polyimide coating material prepared therefrom.

### BACKGROUND

In general, polyimide resin refers to a highly heat-resistant resin obtained by performing solution polymerization on aromatic dianhydride and aromatic diamine or aromatic diisocyanate to produce a polyamic acid derivative, followed by ring-closure dehydration at high temperature and imidization. The polyimide resin is an insoluble, infusible, ultra-high heat-resistant resin and has excellent properties such as thermal oxidation resistance, heat resistance, radiation resistance, low-temperature characteristics, chemical resistance, and the like, and thus it is used in a wide range of fields, including heat-resistant advanced materials such as automotive materials, aviation materials, and spacecraft materials, etc., and electronic materials such as insulating coatings, insulating films, semiconductors, and electrode protective films of TFT-LCD. Recently, the polyimide resin is also used in display materials such as optical fibers and liquid crystal alignment films, transparent electrode films by containing conductive filler in the films or performing surface coating, etc.

In particular, in insulated wires used as windings for coils such as motors, the insulating layer (insulating coating film) coating a conductor requires excellent insulation, adhesion to the conductor, heat resistance, mechanical strength, etc. Therefore, polyimide is used as a resin to form the insulating layer.

However, in electrical devices having high applied voltages, such as motors used at high voltages among insulating layers or coating materials, high voltages are applied to the insulated wires constituting the electrical device, and polyimides having excellent pulse endurance characteristics to handle such high voltages are still in need of development.

Specifically, partial discharges (corona discharges) readily occur on a surface of the coating where high voltages are applied, and when the occurrence of a corona discharge causes a localized temperature increase or the generation of ozone or ions, the coating of insulated wires may deteriorate, causing premature insulation breakdown and shortening the lifespan of electrical device. Therefore, the use of polyimide as a coating material for conductors, particularly as a coating material where high voltages are applied, requires improvements in pulse endurance characteristics such as insulation breakdown voltage performance or corona discharge initiation voltage.

### SUMMARY

An embodiment of the present disclosure is directed to providing polyimide varnish having excellent pulse endurance.

Another embodiment of the present disclosure is directed to providing a polyimide prepared by imidizing the polyimide varnish.

Still another embodiment of the present disclosure is directed to providing a polyimide coating material comprising a cured product of the polyimide varnish.

Various modifications can be made and various embodiments may be implemented in the present disclosure, and specific exemplary embodiments are illustrated in the drawings and described in detail. However, these exemplary embodiments are not intended to limit the present disclosure, and should be understood to comprise all modifications, equivalents, and substitutes included in the spirit and scope of the present disclosure.

Terms used in the present application are only used to describe specific embodiments and are not intended to limit the present disclosure. Singular expressions include plural expressions unless the context clearly indicates otherwise. In the present specification, terms such as "comprise" or "have" are intended to designate the presence of features, numbers, steps, operations, components, parts, or combinations thereof described in the specification and it should not be understood as precluding the possibility of the presence or addition of one or more other features, numbers, steps, operations, components, parts, or combinations thereof.

When amounts, concentrations, or other values or parameters herein are given as ranges, preferred ranges, or lists of upper desirable values and lower desirable values, it should be understood as specifically disclosing all ranges formed by any pair of any upper range limit or preferred value and any lower range limit or preferred value, regardless of whether the scope is separately disclosed.

Where ranges of numerical values are stated herein, unless otherwise stated, it is intended that the endpoints of the range and the scope of the parent invention within the range are not limited to the specific values stated when defining the range.

As used herein, "dianhydride" is intended to include precursors or derivatives thereof, which are also referred to as "dianhydride" or "acid dianhydride". These products may technically not be dianhydrides, but will nonetheless react with diamines to form polyamic acids, and the polyamic acids may be converted back into polyimides.

As used herein, "diamine" is intended to include precursors or derivatives thereof, which may technically not be diamines, but will nonetheless react with dianhydride acid to form a polyamic acid, and the polyamic acid may be converted back into polyimide.

Further, unless defined otherwise, all terms used herein, including technical or scientific terms, have the same meaning as commonly understood by one of ordinary skill in the art to which the present disclosure belongs. Terms such as those defined in commonly used dictionaries should be interpreted as having a meaning consistent with the meaning in the context of the related art, and unless explicitly defined in the present application, it is not to be construed in an idealized or overly formal sense. Specific details for the implementation of the disclosure will be described below.

### Polyimide varnish

The present disclosure relates to polyimide varnish having improved pulse endurance and being usable for application in conductor coating.

In one general aspect, there is provided polyimide varnish comprising: polyamic acid containing dianhydride monomer and diamine monomer as polymerized units; and nanosilica, wherein the nanosilica has an absolute value of zeta potential of 10.0 mV to 40.0 mV.

### Nanosilica

The polyimide varnish of the present disclosure may comprise inorganic particles to improve properties, such as pulse endurance, etc., wherein the inorganic particles are nanosilica, i.e., nanosized silicon dioxide (SiO₂) particulates having an average particle diameter of 1000 nm or less, the form and shape of which are not particularly limited.

The absolute value of zeta potential may have a lower limit of 10.5 mV or more, 11.0 mV or more, 11.5 mV or more, 12.0 mV or more, 12.5 mV or more, 13.0 mV or more, 13.5 mV or more, 14.0 mV or more, 14.5 mV or more, or 15.0 mV or more, and may have an upper limit of 38.0 mV or less, 35.0 mV or less, 32.0 mV or less, 30.0 mV or less, 28.0 mV or less, 27.0 mV or less, 26.0 mV or less, 25.0 mV or less, 24.0 mV or less, 23.5 mV or less, 23.0 mV or less, 22.5 mV or less, 22.0 mV or less, 21.0 mV or less, 20.5 mV or less, or 20.0 mV or less. By controlling the absolute value range of zeta potential, it is possible to maintain high dispersibility without flocculation among nanosilicas within the polyimide varnish, thereby improving pulse endurance (corona resistance). Here, the zeta potential may be a zeta potential of nanosilica (silica sol) dispersed in an organic solvent, and the pH of the silica sol may be 2 to 12.

In an embodiment, the zeta potential of nanosilica dispersed in an organic solvent may be measured by inputting a refractive index, viscosity, and dielectric constant of the organic solvent (dispersion medium) into Benano180 Zeta Pro from Bettersize instruments Ltd. The organic solvent may be any one selected from the group consisting of N-methylpyrrolidone (NMP), N-ethylpyrrolidone (NEP), dimethylacetamide (DMAc), dimethylformamide (DMF), and diethylformamide (DEF).

The organic solvent may have, for example, at 25°C, a refractive index of 1.2 to 1.6, a viscosity of 0.5 cP to 2.0 cP, and a dielectric constant of 30 to 40. Preferably, the organic solvent may have, for example, at 25°C, a refractive index of 1.3 to 1.5, a viscosity of 0.7 cP to 1.7 cP, and a dielectric constant of 32 to 39, more preferably, at 25°C, a refractive index of 1.35 to 1.47, a viscosity of 0.8 cP to 1.0 cP, and a dielectric constant of 35 to 38.5, and more preferably, at 25°C, a refractive index of 1.4 to 1.45, a viscosity of 0.85 cP to 0.95 cP, and a dielectric constant of 37 to 38.

In an example, nanosilica dispersed in dimethylacetamide (here, the silica solid content concentration is 30 wt%) may be used.

The zeta potential is a potential difference of colloidal particles suspended in a liquid phase. Particles dispersed in a solution have either a negative (-) or positive (+) electrical charge on surfaces thereof, and the concentration of (+) ions increases around the (-) charged colloidal particles, forming a stern layer. Outside of the stern layer is a diffuse layer, which reduces the concentration of (+) ions, thereby achieving a balance between the (-) and (+) ions. The potential difference between the starting point of the diffuse layer and the point where the (-) and (+) ions are in balance is called the zeta potential. This zeta potential is used as a measure of the stability of the dispersed sol, because it reflects the strength of the repulsive forces between charged particles in the dispersion. The higher the value of zeta potential, whether negative (-) or positive (+), the stronger the electrical repulsion between particles, and thus a distance between the particles increases to achieve a stable state without agglomeration. The value of zeta potential may be used to determine the measure of dispersion stability. In other words, the larger the absolute value of zeta potential, the better the dispersibility. In addition, different solvents, concentrations, pH, functional groups, and surface properties of particles may result in different zeta potential values, and thus it is desirable to perform comparison as a measure of stability.

Further, the nanosilica may have an average particle diameter of 1 to 200 nm, specifically, for example, 5 to 150 nm, 5 to 100 nm, 5 to 70 nm, 10 to 50 nm, or 10 to 30 nm. The average particle diameter may be measured through equipment such as BET, SEM, zeta potential analyzer, and the like.

In addition, the nanosilica may be nanosilica surface-modified with organosilane.

Further, the organosilane of the nanosilica surface-modified with organosilane may comprise at least one selected from the group consisting of methyltrimethoxysilane, hexamethyldisiloxane, n-octyltrimethoxysilane, n-octyltriethoxysilane, isooctyltrimethoxysilane, dodecyltrimethoxysilane, octadecyltrimethoxysilane, propyltrimethoxysilane, hexyltrimethoxysilane, 3-methacryloxypropyltrimethoxysilane, 3-acryloxypropyltrimethoxysilane, 3-(methacryloxy)propyltriethoxysilane, 3-(methacryloxy)propylmethyldimethoxysilane, 3-(acryloxypropyl)methyldimethoxysilane, 3-(methacryloxy)propyldimethylethoxysilane, styrylethyltrimethoxysilane, phenyltriethoxysilane, p-tolyltriethoxysilane, vinylmethyldiacetoxysilane, vinyldimethylethoxysilane, vinylmethyldiethoxysilane, vinyltrimethoxysilane, vinyltriethoxysilane, vinyltriacetoxysilane, vinyltriisopropoxysilane, vinyltriphenoxysilane, vinyltri-t-butoxysilane, vinyltris(isobutoxy)silane, vinyltriisopropenoxysilane, vinyltris(2-methoxyethoxy)silane, N,N-diisopropylethylamine phenyltrimethoxysilane, glycidoxypropyl trimethoxysilane (GPTMS), 3-aminopropyl)trimethoxy-silane (APTMS), phenyltrimethoxysilane (PTMS), and N-phenyl-3-aminopropyltrimethoxysilane (PAPTES).

Further, the nanosilica surface-modified with organosilane may be obtained by combining, on a surface of the nanosilica, a compound comprising at least one phenyl group at a terminal end and a compound comprising at least one amine group, hydroxy group, thiol group, or epoxide group at a terminal end. Specifically, the compound comprising at least one phenyl group at the terminal end may be phenyltrimethoxysilane (PTMS) or N-phenyl-3-aminopropyltrimethoxysilane (PAPTES). Further, the compound comprising at least one amine group, hydroxy group, thiol group, or epoxide group at the terminal end may be glycidoxypropyl trimethoxysilane (GPTMS) or 3-aminopropyl trimethoxy-silane (APTMS).

The nanosilica surface-modified with the organosilane may be prepared by surface treating the nanosilica with the organosilane. For example, nanosilica may be obtained by heating organosilanes under acidic or basic conditions and performing surface treatment for about 1 to 24 hours. In addition, the surface modification may be achieved by other known methods, for example, by mixing organosilanes in a solvent and then reacting at a temperature of 10 to 100°C or 20 to 60°C for 1 to 10 hours or 1 to 5 hours to obtain surface-modified nanosilica. To combine two or more compounds on the surface of the nanosilica, each of the above methods may be performed.

The nanosilica surface-modified with organosilane of the present disclosure may prevent the agglomeration of inorganic particles in the polyimide varnish, and may enhance the interaction with solid content (polyamic acid) due to functional groups of the compound, thereby improving dispersibility and miscibility.

The nanosilica may also be contained in an amount of 4 to 30 parts by weight, based on 100 parts by weight of the polyimide solid content contained in the total polyimide varnish. For example, a lower limit of the amount of the nanosilica may be 4.3 parts by weight or more, 4.5 parts by weight or more, 4.8 parts by weight or more, 5.0 parts by weight or more, 5.3 parts by weight or more, 5.5 parts by weight or more, 5.7 parts by weight or more, 5.8 parts by weight or more, or 5.9 parts by weight or more. Further, an upper limit of the amount of the nanosilica may be 25 parts by weight or less, 20 parts by weight or less, 19 parts by weight or less, 18 parts by weight or less, 17 parts by weight or less, 16 parts by weight or less, 15 parts by weight or less, 14.5 parts by weight or less, 14 parts by weight or less, 13.5 parts by weight or less, 13.3 parts by weight or less, or 13 parts by weight or less. If the amount of the nanosilica is less than 4 parts by weight, it is not effective in improving the pulse endurance, and if the amount thereof is more than 30 parts by weight, it is not desirable since physical properties may decrease.

### Polyamic acid

In the present disclosure, the dianhydride monomer may comprise at least one selected from the group consisting of pyromellitic dianhydride (PMDA), biphenyl tetracarboxylic dianhydride (BPDA), benzophenone tetracarboxylic dianhydride (BTDA), oxidiphthalic dianhydride (ODPA), diphenylsulfone-3,4,3',4'-tetracarboxylic dianhydride (DSDA), bis(3,4-dicarboxyphenyl)sulfide dianhydride, 2,2-bis(3,4-dicarboxyphenyl)-1,1,1,3,3,3-hexafluoropropane dianhydride, 2,3,3',4'-benzophenone tetracarboxylic dianhydride, bis(3,4-dicarboxyphenyl)methane dianhydride, 2,2-bis(3,4-dicarboxyphenyl)propane dianhydride, p-phenylenebis(trimelytic monoester acid anhydride), p-biphenylenebis(trimelytic monoester acid anhydride), m-terphenyl-3,4,3',4'-tetracarboxylic dianhydride, p-terphenyl-3,4,3',4'-tetracarboxylic dianhydride, 1,3-bis(3,4-dicarboxyphenoxy)benzene dianhydride, 1,4-bis(3,4-dicarboxyphenoxy)benzene dianhydride, 1,4-bis(3,4-dicarboxyphenoxy)biphenyl dianhydride, 2,2-bis[(3,4-dicarboxyphenoxy)phenyl]propane dianhydride (BPADA), 2,3,6,7-naphthalene tetracarboxylic acid dianhydride, 1,4,5,8-naphthalenetetracarboxylic dianhydride, and 4,4'-(2,2-hexafluoroisopropylidene)diphthalic acid dianhydride.

Preferably, the dianhydride monomer may comprise at least one selected from the group consisting of pyromellitic dianhydride (PMDA), biphenyl tetracarboxylic dianhydride (BPDA), and benzophenone tetracarboxylic dianhydride (BTDA), and more preferably, pyromellitic dianhydride (PMDA).

Further, the diamine monomer may comprise at least one selected from the group consisting of 1,4-diaminobenzene (PPD), 4,4'-diaminodiphenyl ether (ODA), 2,2-bisaminophenoxyphenylpropane (BAPP), metaphenylenediamine, 3,3'-dimethylbenzidine, 2,2'-dimethylbenzidine, 2,4-diaminotoluene, 2,6-diaminotoluene, 3,5-diaminobenzoic acid (DABA), 3,4'-diaminodiphenyl ether, 4,4'-diaminodiphenylmethane (MDA), 3,3'-dimethyl-4,4'-diaminobiphenyl, 2,2'-dimethyl-4,4'-diaminobiphenyl (m-tolidine), 2,2'-bis(trifluoromethyl)-4,4'-diaminobiphenyl, 3,3'-dimethyl-4,4'-diaminodiphenyl methane, 3,3'-dicarboxy-4,4'-diaminodiphenylmethane, 3,3',5,5'-tetramethyl-4,4'-diamino diphenylmethane, bis(4-aminophenyl)sulfide, 4,4'-diaminobenzanilide, 3,3'-dimethoxybenzidine, 2,2'-dimethoxybenzidine, 3,3'-diaminodiphenyl ether, 3,3'-diaminodiphenyl sulfide, 3,4'-diaminodiphenyl sulfide, 4,4'-diaminodiphenyl sulfide, 3,3'-diaminodiphenyl sulfone, 3,4'-diaminodiphenyl sulfone, 4,4'-diaminodiphenyl sulfone, 3,3'-diaminobenzophenone, 4,4'-diaminobenzophenone, 3,3'-diamino-4,4'-dichlorobenzophenone, 3,3'-diamino-4,4'-dimethoxybenzophenone, 3,3'-diaminodiphenylmethane, 3,4'-diaminodiphenylmethane, 2,2-bis(3-aminophenyl)propane, 2,2-bis(4-aminophenyl)propane, 2,2-bis(3-aminophenyl)-1,1,1,3,3,3-hexafluoropropane, 2,2-bis(4-aminophenyl)-1,1,1,3,3,3-hexafluoropropane, 3,3'-diaminodiphenyl sulfoxide, 3,4'-diaminodiphenyl sulfoxide, 4,4'-diaminodiphenyl sulfoxide, 1,3-bis(3-aminophenyl)benzene, 1,3-bis(4-aminophenyl)benzene, 1,4-bis(3-aminophenyl)benzene, 1,4-bis(4-aminophenyl)benzene, 1,3-bis(4-aminophenoxy)benzene (TPE-R), 1,4-bis(3-aminophenoxy)benzene (TPE-Q), 1,3-bis(3-aminophenoxy)-4-trifluoromethylbenzene, 3,3'-diamino-4-(4-phenylphenoxy)benzophenone, 3,3'-diamino-4,4'-di(4-phenylphenoxy)benzophenone, 1,3-bis(3-aminophenyl sulfide)benzene, 1,3-bis(4-aminophenyl sulfide)benzene, 1,4-bis(4-aminophenyl sulfide)benzene, 1,3-bis(3-aminophenylsulfone)benzene, 1,3-bis(4-aminophenylsulfone)benzene, 1,4-bis(4-aminophenylsulfone)benzene, 1,3-bis[2-(4-aminophenyl)isopropyl]benzene, 1,4-bis[2-(3-aminophenyl)isopropyl]benzene, 1,4-bis[2-(4-amino)phenyl)isopropyl]benzene, 3,3'-bis(3-aminophenoxy)biphenyl, 3,3'-bis(4-aminophenoxy)biphenyl, 4,4'-bis(3-aminophenoxy)biphenyl, 4,4'-bis(4-aminophenoxy)biphenyl, bis[3-(3-aminophenoxy)phenyl]ether, bis[3-(4-aminophenoxy)phenyl]ether, bis[4-(3-aminophenoxy)phenyl]ether, bis[4-(4-aminophenoxy)phenyl]ether, bis[3-(3-aminophenoxy)phenyl]ketone, bis[3-(4-aminophenoxy)phenyl]ketone, bis[4-(3-aminophenoxy)phenyl]ketone, bis[4-(4-aminophenoxy)phenyl]ketone, bis[3-(3-aminophenoxy)phenyl]sulfide, bis[3-(4-aminophenoxy)phenyl]sulfide, bis[4-(3-aminophenoxy)phenyl]sulfide, bis[4-(4-aminophenoxy)phenyl]sulfide, bis[3-(3-aminophenoxy)phenyl]sulfone, bis[3-(4-aminophenoxy)phenyl]sulfone, bis[4-(3-aminophenoxy)phenyl]sulfone, bis[4-(4-aminophenoxy)phenyl]sulfone, bis[3-(3-aminophenoxy)phenyl]methane, bis[3-(4-aminophenoxy)phenyl]methane, bis[4-(3-aminophenoxy)phenyl]methane, bis[4-(4-aminophenoxy)phenyl]methane, 2,2-bis[3-(3-aminophenoxy)phenyl]propane, 2,2-bis[3-(4-aminophenoxy)phenyl]propane, 2,2-bis[4-(3-aminophenoxy)phenyl]propane, 2,2-bis[3-(3-aminophenoxy)phenyl]-1,1,1,3,3,3-hexafluoropropane, 2,2-bis[3-(4-aminophenoxy)phenyl]-1,1,1,3,3,3-hexafluoropropane, 2,2-bis[4-(3-aminophenoxy)phenyl]-1,1,1,3,3,3-hexafluoropropane, and 2,2-bis[4-(4-aminophenoxy)phenyl]-1,1,1,3,3,3-hexafluoropropane.

Specifically, the diamine monomer may comprise at least one selected from the group consisting of 1,4-diaminobenzene (PPD), 4,4'-diaminodiphenyl ether (ODA), 2,2-bisaminophenoxyphenylpropane (BAPP), and 1,3-bis(4-aminophenoxy)benzene (TPE-R), and preferably, may comprise 4,4'-diaminodiphenyl ether (ODA).

The polyamic acid may contain pyromellitic dianhydride (PMDA) and 4,4'-diaminodiphenyl ether (ODA) as the polymerized units.

In the present disclosure, in the total dianhydride monomers, pyromellitic dianhydride (PMDA) may be included in a ratio of 50 mol% or more, specifically 60 mol% or more, 70 mol% or more, 75 mol% or more, 80 mol% or more, 85 mol% or more, 90 mol% or more, 95 mol% or more, 99 mol% or more, or 100 mol% or more.

Further, in the total diamine monomers, 4,4'-diaminodiphenyl ether (ODA) may be included in a ratio of 50 mol% or more, specifically 60 mol% or more, 70 mol% or more, 75 mol% or more, 80 mol% or more, 85 mol% or more, 90 mol% or more, 95 mol% or more, 99 mol% or more, or 100 mol% or more.

The polyamic acid solution of the present disclosure may contain 95 to 105 mol% of the dianhydride monomer based on 100 mol% of the diamine monomer. For example, the lower limit of the dianhydride monomer may be 96 mol% or more, 97 mol% or more, 98 mol% or more, 99 mol% or more, or 99.5 mol% or more, and the upper limit thereof may be 104 mol% or less, 103 mol% or less, 102 mol% or less, 101 mol% or less, or 100.5 mol% or less.

Further, a molar ratio of the dianhydride monomer and the diamine monomer may be 6 : 4 to 4 : 6, preferably 5.5 : 4.5 to 4.5 : 6.5, and more preferably 5 : 5.

Further, the polyimide varnish may have a polyimide solid content of 10 to 50 wt%. The lower limit of the polyimide solid content may be, for example, 13 wt% or more, 15 wt% or more, 18 wt% or more, 20 wt% or more, or 25 wt% or more, and the upper limit thereof may be, for example, 48 wt% or less, 45 wt% or less, 43 w% or less, 40 wt% or less, 38 wt% or less, 35 wt% or less, 33 wt% or less, or 30 wt% or less. By adjusting the polyimide solid content of the polyimide varnish, it is possible to control the increase in viscosity and to shorten the processing time during the curing process.

### Organic solvent

In the present disclosure, the polyimide varnish further comprises an organic solvent, wherein the organic solvent is not particularly limited as long as it is an organic solvent in which the polyamic acid is soluble, but may be, as one example, an aprotic polar solvent.

Specifically, the organic solvent may comprise at least one selected from the group consisting of N-methyl-pyrrolidone (NMP), N,N'-dimethylformamide (DMF), N,N'-diethylformamide (DEF), N,N'-dimethylacetamide (DMAc), dimethylpropanamide (DMPA), N,N-diethylacetamide (DEAc), dimethyl sulfoxide (DMSO), 3-methoxy-N,N-dimethylpropanamide (KJCMPA), p-chlorophenol, o-chlorophenol, gammabutyrolactone (GBL), diglyme, and naphthalene. Preferably, N-methyl-pyrrolidone (NMP), N,N'-dimethylformamide (DMF), N,N'-dimethylacetamide (DMAc), dimethyl sulfoxide (DMSO), and the like, may be used.

The organic solvent may further comprise a modifier containing a hydroxyl group (OH) or amine group (NH). Examples of the modifier containing a hydroxy group (OH) or an amine group (NH) may include ethylamine, triethanolamine, dimethylamine, trimethylamine, diethylenetriamine, ethylenediamine, tributylamine, pyridine, pyrrolidine, methanol, ethanol, propanol, isopropanol, sec-butanol, tert-butanol, n-amyl alcohol, isoamyl alcohol, hexanol, octanol, capryl alcohol, nonyl alcohol, decyl alcohol, undecyl alcohol, lauryl alcohol, myristyl alcohol, cetyl alcohol, stearyl alcohol, allyl alcohol, crotyl alcohol, propargyl alcohol, ethylene glycol, propylene glycol, benzyl alcohol, phenol, and the like. The modifier may control reactivity by reacting with the dianhydride monomer.

### Polyimide varnish and cured product thereof

The polyimide varnish may have a viscosity of 500 cP to 20,000 cP, as measured at a temperature of 30°C and a shear rate of 1s⁻¹. For example, the upper limit of the viscosity may be 20,000 cP, 15,000 cP, 10,000 cP or less. The lower limit of the viscosity is not particularly limited, but may be 1,000 cP, 1,200 cP, 1,500 cP, or 1,800 cP or more. The viscosity may be measured using, for example, Haake's Rheostress 600 and may be measured under the conditions of a shear rate of 1/s, a temperature of 30°C, and a plate gap of 1 mm. The present disclosure may provide polyimide varnish having excellent processability by adjusting the viscosity range.

The polyimide varnish may have a haze of 1.5% or less. For example, the upper limit of the haze may be 1.4% or less, 1.3% or less, 1.20 or less, 1.1% or less, 1% or less, 0.9% or less, or 0.8% or less, and the lower limit is not particularly limited, but may be more than 0%, 0.05% or more, or 0.1% or more. In an embodiment, the haze may be measured according to ASTM E308 standard using HunterLab's equipment.

Further, polyimide obtained by curing the polyimide varnish may have a haze of 1.5% or less. For example, the upper limit of the haze may be 1.4% or less, 1.3% or less, 1.20 or less, 1.1% or less, 1% or less, 0.9% or less, 0.80 or less, 0.7% or less, 0.6% or less, or 0.5%, and the lower limit thereof is not particularly limited, but may be more than 0%, 0.05% or more, or 0.1% or more. In an embodiment, the haze may be measured according to ASTM E308 standard using HunterLab's equipment, the polyimide may have a thickness of 20 ± 1.0 µm.

In addition, by using nanosilica having an absolute value range within a predetermined range of zeta potential, the polyimide varnish of the present disclosure and a cured product thereof may prevent agglomeration of the nanosilica in the polyimide varnish and may have excellent dispersibility, thereby implementing a low level of haze.

Further, the polyimide obtained by curing the polyimide varnish may have an elongation of 25% or more, and a lower limit of the elongation may be, for example, 30%, 33%, 35%, 36%, 37%, 38%, or 39% or more. An upper limit thereof is not particularly limited, but may be 800 or less. In an embodiment, the elongation may be determined by curing the polyimide varnish into a polyimide film, cutting the film into pieces 10 mm wide and 40 mm long, and measuring the elongation using INSTRON's Instron 5564 UTM equipment according to the ASTM D-882 standard.

Further, the polyimide obtained by curing the polyimide varnish may have a tensile strength of 100 MPa or more, and a lower limit of the tensile strength may be, for example, 105 MPa, 110 MPa, 115 MPa, 120 MPa, 124 MPa, or 128 MPa or more. An upper limit thereof is not particularly limited, but may be 400 MPa or less. The tensile strength may be determined by preparing samples of 500 mm in length and 10 mm in width, measuring the tensile strength at a rate (50 mm/min) using INSTRON's Instron 5564 UTM equipment, and calculating the average of 10 samples.

In another aspect of the present disclosure, there is provided a polyimide cured product obtained by curing the polyimide varnish as described above, wherein the polyimide cured product may be a polyimide film.

The polyimide cured product may have a pulse endurance of 300 minutes or more, which is the time that an insulating material withstands a certain voltage according to IEC-60851-5. A lower limit of the pulse endurance may be, for example, 330 minutes or more, 370 minutes or more, 400 minutes or more, 450 minutes or more, 500 minutes or more, 550 minutes or more, 600 minutes or more, 650 minutes or more, 700 minutes or more, 720 minutes or more, 750 minutes or more, 770 minutes or more, 800 minutes or more, 820 minutes or more, or 830 minutes or more. An upper limit thereof is not particularly limited, but may be 3,000 minutes or less. The pulse endurance may be determined by connecting a polyimide coating material to a jig, applying an AC 1.5-kV voltage (frequency of 60 Hz), and measuring the time until a leakage current of 5 mA or more is detected. Here, a thickness of the polyimide may be 26 ± 1.0 µm.

Further, the polyimide varnish and a cured product thereof according to the present disclosure may have improved pulse endurance by using the nanosilica having an absolute value range within a predetermined range of zeta potential.

The polyimide cured product may have a breakdown voltage (BDV) of 200 kV/mm or more, as measured according to the ASTM D149 standard. A lower limit of the breakdown voltage may be, for example, 205 kV/mm or more, 210 kV/mm or more, 215 kV/mm or more, 220 kV/mm or more, 225 kV/mm or more, 230 kV/mm or more, 233 kV/mm or more, 235 kV/mm or more, 238 kV/mm or more, 240 kV/mm or more, 241 kV/mm or more, or 242 kV/mm or more. An upper limit thereof is not particularly limited, but may be 500 kV/mm or less.

In still another aspect of the present disclosure, there is provided a polyimide prepared by imidizing the polyimide varnish as described above, wherein the polyimide may be in the form of a film.

In still another aspect of the present disclosure, there is provided a polyimide coating material comprising the polyimide cured product.

In an embodiment, a method of preparing the polyimide coating material may comprise coating polyimide varnish on a conductor surface; and imidizing the polyimide varnish coated on the conductor surface.

The conductor may be a copper wire made of copper or a copper alloy, but may also comprise conductors made of other metal materials such as silver wire, etc., or various metal-plated wires such as aluminum or tin-plated conducting wires, etc. The conductor and coating material may have a thickness according to the KS C3107 standard. A diameter of the conductor may be in the range of 0.3 to 3.2 mm, and a standard film thickness of the coating film (average value of the maximum film thickness and minimum film thickness) may be 21 to 194 um for type 0, 14 to 169 um for type 1, and 10 to 31 um for type 2. Depending on the cross-sectional shape of the conductor, the conductor may be a round wire, a rectangular wire, a hexagonal wire, etc., but is not limited thereto.

In another aspect of the present disclosure, there is provided an electric wire comprising the polyimide coating material.

Specifically, the wire may be a coated electric wire comprising the polyimide coating material prepared by coating the polyimide varnish on a surface of the wire, followed by imidization. In an embodiment, the coated electric wire may comprise an electric wire; and a coating material in which the above-described polyimide is coated on a surface of the electric wire and imidized.

Further, the present disclosure may provide an electronic device comprising the coated wire. The electronic device may be, for example, an electric motor.

In still another aspect, there is provided a component comprising a molded body formed from the polyimide varnish.

Specifically, the component may be electronic circuit board members, semiconductor devices, lithium ion battery members, solar cell members, fuel cell members, motor windings, engine peripheral members, paints, optical components, heat insulators, electromagnetic shielding materials, surge components, dental materials, slide coating, or electrostatic chuck.

### BRIEF DESCRIPTION OF THE DRAWINGS

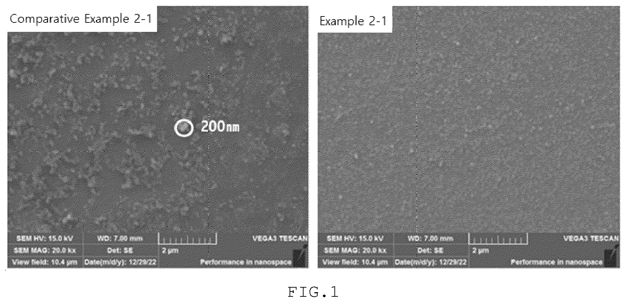

FIG. 1 shows SEM images of film-type polyimide cured products according to Example 2-1 and Comparative Example 2-1.

### DETAILED DESCRIPTION OF EMBODIMENTS

The following Examples are presented to help understanding of the present disclosure. The following examples are only provided to more easily understand the present disclosure, but the content of the present disclosure is not limited by these Examples.

### <Example>

### Preparation Example 1: Nanosilica 1 surface-treated with organosilane

Nanosilica 1 surface treated with organosilane (dimethylacetamide dispersed silica sol, silica solid content concentration of 30 wt%, silica average particle diameter of 10-30 nm, average zeta potential (absolute value) of 17.86 mV) was prepared. Here, the zeta potential was determined by inputting the refractive index, viscosity, and dielectric constant of dimethylacetamide into Bettersize's Benano180 zeta pro apparatus, conducting duplicate measurements, and subsequently computing the arithmetic mean.

### Preparation Comparative Example 1. Nanosilica

Nanosilica (N-methylpyrrolidone dispersed silica sol, silica solid content concentration of 30 wt%, silica average particle diameter of 10-20 nm, average zeta potential (absolute value) of 8.42 mV) was prepared. Here, the zeta potential was determined by inputting the refractive index, viscosity, and dielectric constant of N-methylpyrrolidone into Bettersize's Benano180 zeta pro apparatus, conducting duplicate measurements, and subsequently computing the arithmetic mean.

### Preparation Comparative Example 2. Nanosilica 2 surface-treated with organosilane

Nanosilica 2 surface treated with organosilane (dimethylacetamide dispersed silica sol, silica solid content concentration of 30 wt%, silica average particle diameter of 10-20 nm, average zeta potential (absolute value) of 4.59 mV) was prepared. Here, the zeta potential was determined by inputting the refractive index, viscosity, and dielectric constant of dimethylacetamide into Bettersize's Benano180 zeta pro apparatus, conducting duplicate measurements, and subsequently computing the arithmetic mean.

### Preparation Comparative Example 3. Nanosilica 3 surface-treated with organosilane

Nanosilica 3 surface treated with organosilane (dimethylacetamide dispersed silica sol, silica solid content concentration of 30 wt%, silica average particle diameter of 10-20 nm, average zeta potential (absolute value) of 1.51 mV) was prepared. Here, the zeta potential was determined by inputting the refractive index, viscosity, and dielectric constant of dimethylacetamide into Bettersize's Benano180 zeta pro apparatus, conducting duplicate measurements, and subsequently computing the arithmetic mean.

### Example 1. Polyimide varnish

### Example 1-1

In a reaction vessel filled with nitrogen gas, an organic solvent containing dimethylacetamide (DMAc) and a modifier (0-2 mol%) was added, and nanosilica surface treated with organosilane (6 wt% relative to polyimide solid content) according to Preparation Example 1 and pyromellitic dianhydride (PMDA) (92 mol%) as a dianhydride monomer were mixed and stirred at 40°C for 30 minutes. Then, 4,4'-diaminodiphenylether (ODA) (100 mol%) as a diamine monomer and pyromellitic dianhydride (PMDA) (8 mol%) were added, stirred, and polymerized at 40°C for about 1 hour to prepare polyimide varnish (25 wt% polyimide solid content).

### Example 1-2

Polyimide varnish was prepared in the same manner as in Example 1, except that nanosilica surface treated with organosilane (12 wt% relative to polyimide solid content) was used instead of using nanosilica surface treated with organosilane (6 wt% relative to polyimide solid content) in Example 1.

### Comparative Examples 1-1 to 1-3

Polyimide varnishes were prepared in the same manner as in Example 1-1, except that components and amount ratios of the dianhydride monomer, the diamine monomer, and the nanosilica surface treated with organosilane were adjusted as shown in Table 1 below.

**[Table 1]**

| Classifi cation | Polyamic acid | | Polyimide solid content | Nanosilica | | Total solid content (PI + NS) |
|---|---|---|---|---|---|---|
| | Dianhydr ide monomer (mol%) | Diamine monomer (mol%) | | Amount relative to polyimide solid content (wt%) | Amount relative to polyimide varnish (wt%) | |
| Example 1-1 | PMDA (100 mol%) | ODA (100 mol%) | 25 wt% | Preparation Example 1 (6 wt%) | Preparation Example 1 (1.5 wt%) | 26.5 wt% |
| Example 1-2 | PMDA (100 mol%) | ODA (100 mol%) | 25 wt% | Preparation Example 1 (12 wt%) | Preparation Example 1 (3 wt%) | 28.0 wt% |
| Comparat ive Example 1-1 | PMDA (100 mol%) | ODA (100 mol%) | 25 wt% | Preparation Comparative Example 1 (6 wt%) | Preparation Comparative Example 1 (1.5 wt%) | 26.5 wt% |
| Comparat ive Example 1-2 | PMDA (100 mol%) | ODA (100 mol%) | 25wt% | Preparation Comparative Example 2 (6 wt%) | Preparation Comparative Example 2. (1.5 wt%) | 26.5 wt% |
| Comparat ive Example 1-3 | PMDA (100 mol%) | ODA (100 mol%) | 25 wt% | Preparation Comparative Example 3 (6 wt%) | Preparation Comparative Example 3. (1.5 wt%) | 26.5 wt% |

### Example 2. Polyimide cured product (polyimide film)

### Example 2-1

The polyimide varnish prepared according to Example 1-1 was rotated at a high speed of 2,000 rpm to remove air bubbles. Then, the degassed polyimide varnish was applied on a glass substrate (230 mm x 230 mm, thickness: 0.55 mm) using a spin coater.

Next, a film-type polyimide cured product (thickness of 20 ± 1.0 um or 26 ± 1.0 µm) was obtained by curing under the conditions of 110°C (20 minutes) → 150°C (20 minutes) → 200°C (20 minutes) → 300°C (20 minutes) under a nitrogen atmosphere.

### Example 2-2

A polyimide cured product was prepared in the same manner as Example 2-1 except that the polyimide varnish according to Example 1-2 was used instead of the polyimide varnish according to Example 1-1.

### Comparative Example 2-1

A polyimide cured product was prepared in the same manner as Example 2-1 except that the polyimide varnish according to Comparative Example 1-1 was used instead of the polyimide varnish according to Example 1-1.

### Comparative Example 2-2

A polyimide cured product was prepared in the same manner as Example 2-1 except that the polyimide varnish according to Comparative Example 1-2 was used instead of the polyimide varnish according to Example 1-1.

### Comparative Example 2-3

A polyimide cured product was prepared in the same manner as Example 2-1 except that the polyimide varnish according to Comparative Example 1-3 was used instead of the polyimide varnish according to Example 1-1.

### Example 3. Polyimide coating material

### Example 3-1

An electric wire containing a polyimide coating material with a coating thickness of 110 ± 10 µm was prepared in a coating-curing furnace by repeating the process of coating, drying, and curing the polyimide varnish according to Example 1-1 on an angular shaped copper wire, 20 to 28 times.

### Example 3-2

A polyimide coating material was prepared in the same manner as Example 3-1 except that the polyimide varnish according to Example 1-2 was used instead of the polyimide varnish according to Example 1-1.

### <Experimental Examples>

### Experimental Example 1. SEM Analysis

The film-type polyimide cured products according to Example 2-1 and Comparative Example 2-1 were analyzed using a scanning electron microscope, specifically the VEGA3 model by TESCA, and the SEM images are shown in FIG. 1.

As shown in FIG. 1, Comparative Example 2-1 showed particles of 200 nm, which are agglomerated particles of nanosilica. Meanwhile, it could be appreciated in Example 2-1 that the nanosilica was evenly dispersed without agglomeration. Therefore, it was found that the degree of nanosilica dispersion and agglomeration varies depending on the absolute value of zeta potential.

### Experimental Example 2. Evaluation of physical properties

Physical properties of cured products of Examples 2-1 to 2-2 and Comparative Examples 2-1 and 2-2, which were obtained by curing the polyimide varnishes prepared according to Examples 1-1 to 1-2 and Comparative Examples 1-1 to 1-2, were confirmed in the following manner, and results thereof are shown in Tables 2 and 3 below.

### (1) Pulse endurance

The pulse endurance was determined according to IEC-60851-5 by connecting the polyimide films (thickness of 26 ± 1.0 um) of Examples 2-1, 2-2, and Comparative Example 2-1 to a jig, applying an AC 1.5-kV voltage (frequency of 60 Hz), and measuring the time until a leakage current of 5 mA or more was detected. Results thereof are shown in Table 2 below.

### (2) Haze

The haze of polyimide varnishes (Examples 1-1, 1-2, and Comparative Examples 1-1 to 1-3) was measured according to ASTM E308 standard using HunterLab's equipment, and results thereof are shown in Table 3 below.

**[Table 2]**

| Polyimide film | Example 2-1 | Example 2-2 | Comparative Example 2-1 |
|---|---|---|---|
| Nanosilica (Amount relative to solid content) | Preparation Example 1 (6 wt%) | Preparation Example 1 (12 wt%) | Preparation Comparative Example 1 (6 wt%) |
| Pulse endurance (min) | 857 | 1, 667 | 282 |

**[Table 3]**

| Polyimide varnish | Haze (%) |
|---|---|
| Example 1-1 | 0.6 |
| Example 1-2 | 0.6 |
| Comparative Example 1-1 | 6.2 |
| Comparative Example 1-2 | 2.7 |
| Comparative Example 1-3 | 2.4 |

It could be seen from Table 2 that by using the nanosilica having a zeta potential within a predetermined range, the polyimide varnishes of the present disclosure and the film-type cured products thereof showed a significant improvement in pulse endurance of about 3 times or more compared to Comparative Example 2-1.

Further, according to Table 3, both the polyimide varnishes of the present disclosure and film-type cured products thereof were able to achieve low levels of haze characteristics. Specifically, the varnishes of Examples 1-1 and 1-2 showed a haze of 0.6%, which is about four to ten times lower than that of Comparative Examples 1-1 to 1-3, indicating that the nanosilicas were not agglomerated and were evenly dispersed. Comparative Examples 1-1 to 1-3 showed an increase in haze due to agglomeration of materials in the varnish, which could result in a decrease in mechanical properties and quality.

The polyimide varnish of the present disclosure may have excellent pulse endurance and also provide excellent physical properties such as haze for polyimide.

The present disclosure may also have excellent utilization as conductor coating for use in windings for electric vehicles (EVs).

In the present specification, the detailed description of the contents capable of being sufficiently recognized and inferred by those skilled in the art of the present disclosure are omitted, and many variations and modification can be made within a range that does not change the technical spirit or essential configuration of the present disclosure in addition to the specific exemplary embodiments described in the present specification. Therefore, the present disclosure may also be practiced in a manner different from that specifically described and illustrated herein, which can be understood by those skilled in the art.

## Claims

1. Polyimide varnish comprising:
polyamic acid containing dianhydride monomer and diamine monomer as polymerized units; and
nanosilica,
wherein the nanosilica has an absolute value of zeta potential of 10.0 mV to 40.0 mV.

2. The polyimide varnish of claim 1, wherein the nanosilica has an average particle diameter of 1 to 200 nm.

3. The polyimide varnish of claim 1 or 2, wherein the nanosilica is nanosilica surface-modified with organosilane.

4. The polyimide varnish of any one of claims 1 to 3, wherein the organosilane of the nanosilica surface-modified with organosilane comprises at least one selected from the group consisting of
methyltrimethoxysilane, hexamethyldisiloxane, n-octyltrimethoxysilane, n-octyltriethoxysilane, isooctyltrimethoxysilane, dodecyltrimethoxysilane, octadecyltrimethoxysilane, propyltrimethoxysilane, hexyltrimethoxysilane, 3-methacryloxypropyltrimethoxysilane, 3-acryloxypropyltrimethoxysilane, 3-(methacryloxy)propyltriethoxysilane, 3-(methacryloxy)propylmethyldimethoxysilane, 3-(acryloxypropyl)methyldimethoxysilane, 3-(methacryloxy)propyldimethylethoxysilane, styrylethyltrimethoxysilane, phenyltriethoxysilane, p-tolyltriethoxysilane, vinylmethyldiacetoxysilane, vinyldimethylethoxysilane, vinylmethyldiethoxysilane, vinyltrimethoxysilane, vinyltriethoxysilane, vinyltriacetoxysilane, vinyltriisopropoxysilane, vinyltriphenoxysilane, vinyltri-t-butoxysilane, vinyltris(isobutoxy)silane, vinyltriisopropenoxysilane, vinyltris(2-methoxyethoxy)silane, N,N-diisopropylethylamine phenyltrimethoxysilane, glycidoxypropyl trimethoxysilane (GPTMS), 3-aminopropyl trimethoxy-silane (APTMS), phenyltrimethoxysilane (PTMS), and N-phenyl-3-aminopropyltrimethoxysilane (PAPTES).

5. The polyimide varnish of any one of claims 1 to 4, wherein the dianhydride monomer comprises at least one selected from the group consisting of
pyromellitic dianhydride (PMDA), biphenyl tetracarboxylic dianhydride (BPDA), benzophenone tetracarboxylic dianhydride (BTDA), oxidiphthalic dianhydride (ODPA), diphenylsulfone-3,4,3',4'-tetracarboxylic dianhydride (DSDA), bis(3,4-dicarboxyphenyl)sulfide dianhydride, 2,2-bis(3,4-dicarboxyphenyl)-1,1,1,3,3,3-hexafluoropropane dianhydride, 2,3,3',4'-benzophenone tetracarboxylic dianhydride, bis(3,4-dicarboxyphenyl)methane dianhydride, 2,2-bis(3,4-dicarboxyphenyl)propane dianhydride, p-phenylenebis(trimelytic monoester acid anhydride), p-biphenylenebis(trimelytic monoester acid anhydride), m-terphenyl-3,4,3',4'-tetracarboxylic dianhydride, p-terphenyl-3,4,3',4'-tetracarboxylic dianhydride, 1,3-bis(3,4-dicarboxyphenoxy)benzene dianhydride, 1,4-bis(3,4-dicarboxyphenoxy)benzene dianhydride, 1,4-bis(3,4-dicarboxyphenoxy)biphenyl dianhydride, 2,2-bis[(3,4-dicarboxyphenoxy)phenyl]propane dianhydride (BPADA), 2,3,6,7-naphthalene tetracarboxylic acid dianhydride, 1,4,5,8-naphthalenetetracarboxylic dianhydride, and 4,4'-(2,2-hexafluoroisopropylidene)diphthalic acid dianhydride.

6. The polyimide varnish of any one of claims 1 to 5, wherein the diamine monomer comprises at least one selected from the group consisting of
1,4-diaminobenzene (PPD), 4,4'-diaminodiphenyl ether (ODA), 2,2-bisaminophenoxyphenylpropane (BAPP), metaphenylenediamine, 3,3'-dimethylbenzidine, 2,2'-dimethylbenzidine, 2,4-diaminotoluene, 2,6-diaminotoluene, 3,5-diaminobenzoic acid (DABA), 3,4'-diaminodiphenyl ether, 4,4'-diaminodiphenylmethane (MDA), 3,3'-dimethyl-4,4'-diaminobiphenyl, 2,2'-dimethyl-4,4'-diaminobiphenyl (m-tolidine), 2,2'-bis(trifluoromethyl)-4,4'-diaminobiphenyl, 3,3'-dimethyl-4,4'-diaminodiphenyl methane, 3,3'-dicarboxy-4,4'-diaminodiphenylmethane, 3,3',5,5'-tetramethyl-4,4'-diamino diphenylmethane, bis(4-aminophenyl)sulfide, 4,4'-diaminobenzanilide, 3,3'-dimethoxybenzidine, 2,2'-dimethoxybenzidine, 3,3'-diaminodiphenyl ether, 3,3'-diaminodiphenyl sulfide, 3,4'-diaminodiphenyl sulfide, 4,4'-diaminodiphenyl sulfide, 3,3'-diaminodiphenyl sulfone, 3,4'-diaminodiphenyl sulfone, 4,4'-diaminodiphenyl sulfone, 3,3'-diaminobenzophenone, 4,4'-diaminobenzophenone, 3,3'-diamino-4,4'-dichlorobenzophenone, 3,3'-diamino-4,4'-dimethoxybenzophenone, 3,3'-diaminodiphenylmethane, 3,4'-diaminodiphenylmethane, 2,2-bis(3-aminophenyl)propane, 2,2-bis(4-aminophenyl)propane, 2,2-bis(3-aminophenyl)-1,1,1,3,3,3-hexafluoropropane, 2,2-bis(4-aminophenyl)-1,1,1,3,3,3-hexafluoropropane, 3,3'-diaminodiphenyl sulfoxide, 3,4'-diaminodiphenyl sulfoxide, 4,4'-diaminodiphenyl sulfoxide, 1,3-bis(3-aminophenyl)benzene, 1,3-bis(4-aminophenyl)benzene, 1,4-bis(3-aminophenyl)benzene, 1,4-bis(4-aminophenyl)benzene, 1,3-bis(4-aminophenoxy)benzene (TPE-R), 1,4-bis(3-aminophenoxy)benzene (TPE-Q), 1,3-bis(3-aminophenoxy)-4-trifluoromethylbenzene, 3,3'-diamino-4-(4-phenylphenoxy)benzophenone, 3,3'-diamino-4,4'-di(4-phenylphenoxy)benzophenone, 1,3-bis(3-aminophenyl sulfide)benzene, 1,3-bis(4-aminophenyl sulfide)benzene, 1,4-bis(4-aminophenyl sulfide)benzene, 1,3-bis(3-aminophenylsulfone)benzene, 1,3-bis(4-aminophenylsulfone)benzene, 1,4-bis(4-aminophenylsulfone)benzene, 1,3-bis[2-(4-aminophenyl)isopropyl]benzene, 1,4-bis[2-(3-aminophenyl)isopropyl]benzene, 1,4-bis[2-(4-amino)phenyl)isopropyl]benzene, 3,3'-bis(3-aminophenoxy)biphenyl, 3,3'-bis(4-aminophenoxy)biphenyl, 4,4'-bis(3-aminophenoxy)biphenyl, 4,4'-bis(4-aminophenoxy)biphenyl, bis[3-(3-aminophenoxy)phenyl]ether, bis[3-(4-aminophenoxy)phenyl]ether, bis[4-(3-aminophenoxy)phenyl]ether, bis[4-(4-aminophenoxy)phenyl]ether, bis[3-(3-aminophenoxy)phenyl]ketone, bis[3-(4-aminophenoxy)phenyl]ketone, bis[4-(3-aminophenoxy)phenyl]ketone, bis[4-(4-aminophenoxy)phenyl]ketone, bis[3-(3-aminophenoxy)phenyl]sulfide, bis[3-(4-aminophenoxy)phenyl]sulfide, bis[4-(3-aminophenoxy)phenyl]sulfide, bis[4-(4-aminophenoxy)phenyl]sulfide, bis[3-(3-aminophenoxy)phenyl]sulfone, bis[3-(4-aminophenoxy)phenyl]sulfone, bis[4-(3-aminophenoxy)phenyl]sulfone, bis[4-(4-aminophenoxy)phenyl]sulfone, bis[3-(3-aminophenoxy)phenyl]methane, bis[3-(4-aminophenoxy)phenyl]methane, bis[4-(3-aminophenoxy)phenyl]methane, bis[4-(4-aminophenoxy)phenyl]methane, 2,2-bis[3-(3-aminophenoxy)phenyl]propane, 2,2-bis[3-(4-aminophenoxy)phenyl]propane, 2,2-bis[4-(3-aminophenoxy)phenyl]propane, 2,2-bis[3-(3-aminophenoxy)phenyl]-1,1,1,3,3,3-hexafluoropropane, 2,2-bis[3-(4-aminophenoxy)phenyl]-1,1,1,3,3,3-hexafluoropropane, 2,2-bis[4-(3-aminophenoxy)phenyl]-1,1,1,3,3,3-hexafluoropropane, and 2,2-bis[4-(4-aminophenoxy)phenyl]-1,1,1,3,3,3-hexafluoropropane.

7. The polyimide varnish of any one of claims 1 to 6, wherein the polyamic acid contains pyromellitic dianhydride (PMDA) and 4,4'-diaminodiphenyl ether (ODA) as the polymerized units.

8. The polyimide varnish of any one of claims 1 to 7, further comprising: an organic solvent, wherein the organic solvent comprises at least one selected from the group consisting of N-methyl-pyrrolidone (NMP), N,N'-dimethylformamide (DMF), N,N'-diethylformamide (DEF), N,N'-dimethylacetamide (DMAc), dimethylpropanamide (DMPA), N,N-diethylacetamide (DEAc), dimethyl sulfoxide (DMSO), 3-methoxy-N,N-dimethylpropanamide (KJCMPA), p-chlorophenol, o-chlorophenol, gammabutyrolactone (GBL), diglyme, and naphthalene.

9. The polyimide varnish of any one of claims 1 to 8, wherein the polyimide varnish has a polyimide solid content of 10 to 50 wt%.

10. The polyimide varnish of any one of claims 1 to 9, wherein the nanosilica is contained in an amount of 4 to 30 parts by weight, based on 100 parts by weight of the polyimide solid content contained in the total polyimide varnish.

11. The polyimide varnish of any one of claims 1 to 10, wherein the polyimide varnish has a haze of 1.5% or less.

12. The polyimide varnish of any one of claims 1 to 11, wherein the polyimide varnish has a viscosity of 500 cP to 20,000 cP, as measured at a temperature of 30°C and a shear rate of 1s⁻¹.

13. A polyimide cured product obtained by curing the polyimide varnish according to any one of claims 1 to 12.

14. The polyimide cured product of claim 13, wherein the polyimide cured product has a pulse endurance of 300 minutes or more, which is the time that an insulating material withstands a certain voltage according to IEC-60851-5.

15. A polyimide coating material comprising the polyimide cured product according to claim 13 or 14.
